# EUROPEAN PATENT APPLICATION

(11) **EP 1 393 958 A1**
(43) Date of publication of application: **03.03.2004**
(21) Application number: 03254955.2
(22) Date of filing: 08.08.2003
(51) Int. Cl.: B60K 37/04, F16B 2/20

(54) **Retaining clip**

(30) Priority: 31.08.2002 GB 0220283
(71) Applicant: Visteon Global Technologies, Inc., Dearborn, Michigan 48126-2490 (US)
(72) Inventor: Ewers, Paul Simon, Chelmsford, Essex CM2 6YG (GB); Guirauton, Pascal, 95370 Montigny les Cormeilles (FR); Roux, Xavier, 77340 Pontault-Combault (FR)
(74) Representative: McLean, Robert Andreas

(57) **Abstract**

The invention provides a retaining clip (1) for retaining a subassembly (28) in a housing (30). The retaining clip (1) comprises a base member (2) for attachment to the subassembly (28), a flexible member (4) and support means (6). A fixed end of the flexible member (4) is attached to the base member (2) and extends at an acute angle to the base member (2). A movable end (10) of the flexible member (4) carries an engaging portion (12) for engaging an edge (34) of the housing (30) to resist a removal force applied to the subassembly (28). The flexible member (4) biases the engaging portion (12) to an open position away from the base member (2) and the support means (6) are arranged such that the engaging portion (12) may be coupled to the base member (2) through the support means (6) to substantially prevent movement of the engaging portion in response to a removal force.

## Description

The present invention relates to a retaining clip, especially to a retaining clip for retaining an instrument cluster in an instrument panel in an automobile.

When working with large moulded plastic assemblies the manufacturing tolerances possible from the moulded parts may make it difficult to use standard clips to secure the subassemblies together. If there is a large variation in the sizes of the subassemblies, a clip would require a large movement to account for these variations and this may lead to the clip being weak. The large movement of the clip may lead to the retaining force of the clip being low.

It is common in such circumstances to use one or more screws to secure the subassemblies in place. The use of screws increases the number of parts that are used during assembly and this increases the assembly time and hence costs. The possibility of errors being made is also increased. If a screw is not fitted or is fitted incorrectly the assembly may be rejected by quality control and either discarded or disassembled which can increase costs.

It is an object of the invention to provide a retaining clip that address some of the above issues.

According to the invention there is provided a assembly for an automobile, the assembly comprising a housing, and a sub-assembly, the housing having an aperture therethrough said aperture having an edge, the sub-assembly being mounted within the housing by inserting the sub assembly into the aperture in an insertion direction along an assembly axis, and the sub-assembly comprising at least one retaining clip by which the sub-assembly is mounted to the housing, the retaining clip extending along assembly axis and having base member, a flexible member, an engaging portion and a support means, wherein:
a) the base member is attached to the sub-assembly;
b) the flexible member has a fixed and a movable end, the fixed end being attached to the base member and the flexible member extending from the fixed end towards the movable end at an acute angle relative to the assembly axis and towards the edge of the aperture;
c) the movable end of the flexible member carries the engaging portion which extends from the flexible member towards the assembly axis;
d) the flexible member is biased towards an open position away from the assembly axis so that during insertion of the sub-assembly into the aperture, the flexible member contacts the edge of the aperture and is thereby forced towards the assembly axis until the engaging portion engages the edge of the aperture to mount the sub-assembly within the housing and to retain the sub-assembly within the housing against a removal force applied to the sub-assembly opposite the insertion direction;
e) the support means is arranged between the engaging portion and the base member, the support means serving in use to resist deflection of the engaging portion in response to a removal force applied to the sub-assembly and thereby maintain engagement of the engaging portion with the edge of the aperture.

Providing the clip with support means that couple the engaging portion to the base member permits a removal force to be transmitted from the engaging portion to the base member via the support means without passing through the fixed end of the flexible member. This allows the clip to withstand greater removal forces without the flexible member or engaging portion buckling and therefore increases the retention force of the retaining clip. This increase in retention force allows the clip to have a wider range of movement of the engaging portion to allow for greater variations in manufacturing.

The currently preferred form of the support means includes a support post extending from the base member and a guide arm that slidably engages with the support post to permit a removal force to be transmitted from the engaging portion to the base member without passing through the fixed end of the flexible member.

The retaining clip is preferably moulded from a plastic material and is preferably moulded with the flexible member and the engaging portion in the open position as this will automatically bias the retaining clip to the open position. The support means are preferably arranged such that they only couple the engaging portion to the base member when the flexible member has been deflected towards the base member from the open position.

The clip may include an integral delivery lock that can be engaged after manufacture. The retaining clip may be damaged if the flexible member is forced too far from the base member and the delivery lock is arranged to prevent the flexible member from being moved away from the base member beyond a predetermined limit. In the preferred embodiment the delivery lock comprises a hook formed on the guide arm that can be engaged with the support post by moving the engaging portion towards the base member.

After manufacture the delivery lock can be engaged to prevent damage to the retaining clip during transit. If the retaining clip is to be used on site then this may not be required.

To facilitate the engagement of the engaging portion of the retaining clip with an edge of the housing or subassembly the engaging portion may have a ridged or jagged surface that engages the edge. It is preferred that the retaining clip is attached to the subassembly and the engaging portion engages the edge of an aperture in the housing as this facilitates assembly.

An assembly according to the present invention is particularly suitable for use where the subassembly is an instrument cluster and the housing is an instrument panel.

The invention will now be further described, by way of example, with reference to the accompanying drawings, in which:
Figure 1 shows a retaining clip according to a preferred embodiment of the invention in the open position;
Figure 2 shows the retaining clip of Figure 1 in the delivery position;
Figures 3,4 and 5 show the retaining clip of Figure 1 in use in three different positions;
Figure 6 shows the retaining clip of Figure 1 in the extraction or closed position; and
Figure 7 shows a close-up of the engaging portion of a retaining clip according to a second embodiment of the invention.

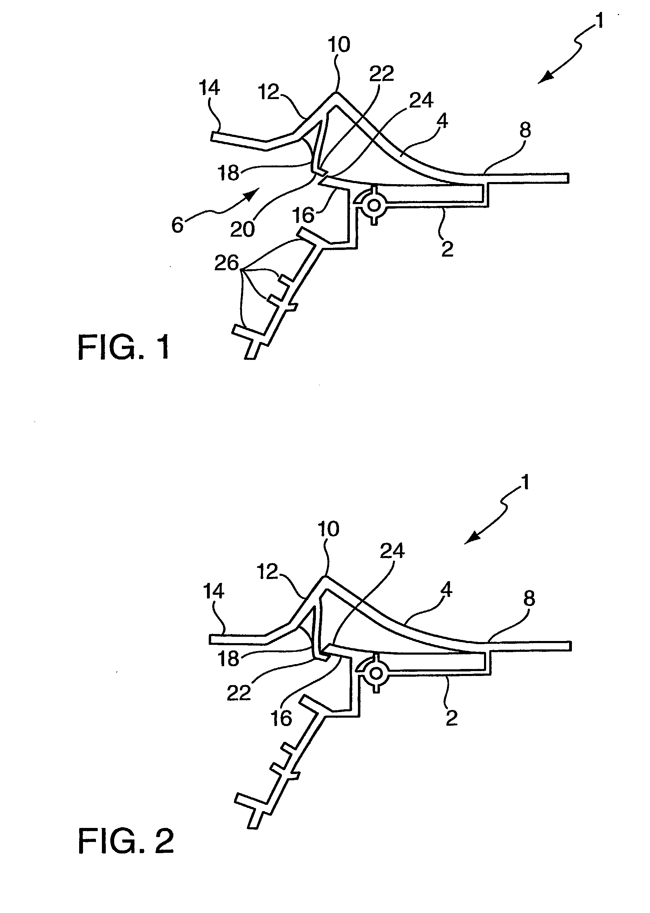

Figure 1 shows a moulded plastic retaining clip 1 in an open position according to a preferred embodiment of the present invention. The retaining clip 1 comprises a base member 2, a flexible member 4 and support means 6. A fixed end 8 of the flexible member 4 is attached to the base member 2. A second end 10 of the flexible member 4 carries an engaging portion 12 that extends transverse to the flexible member 4. The retaining clip 1 is moulded with the engaging portion 12 in an open position away from the base member 2. The flexible member 4 can be flexed to move the movable end 10 closer to, or further from the base member 2. The flexible member 4 is biased to return to the open position in which it was moulded. When the flexible member 4 is flexed, the engaging portion 12 moves substantially in an arc about the fixed end 8 of the flexible member 4.

The base member 2 comprises projections and protrusions 26 that facilitate connection of the clip 1 to a sub-assembly (not shown).

The retaining clip 1 further comprises an override portion 14 extending from the engagement portion 12 to allow manual or mechanical movement of the second end of the flexible member 4.

The support means 6 comprise a support post 16 extending in first direction from the base member 2 and a guide arm 18 extending from engagement portion 12 in a second direction substantially perpendicular to the first direction. A distal end 20 of the guide arm 18 is formed into a hook 22 that may be engaged over a support end 24 of the support post 16 by moving the flexible member towards the closed position. Once the hook 22 has been engaged over the support end 24 the clip 1 is retained in a delivery position as shown in Figure 2.

Figure 2 shows the clip 1 in the delivery position. The engagement of the hook 22 with the support end 24 prevents the flexible member 4 being moved away from the base member 2, but permits the flexible member 4 to be moved towards the base member 2. Preventing the flexible member 4 from being moved away from the base member 2 helps to prevent damage to the retaining clip 1 that may be caused if the flexible member 4 is flexed too far from the base member 2. The delivery position as shown in Figure 2 is therefore safer for transportation of the retaining clip 1.

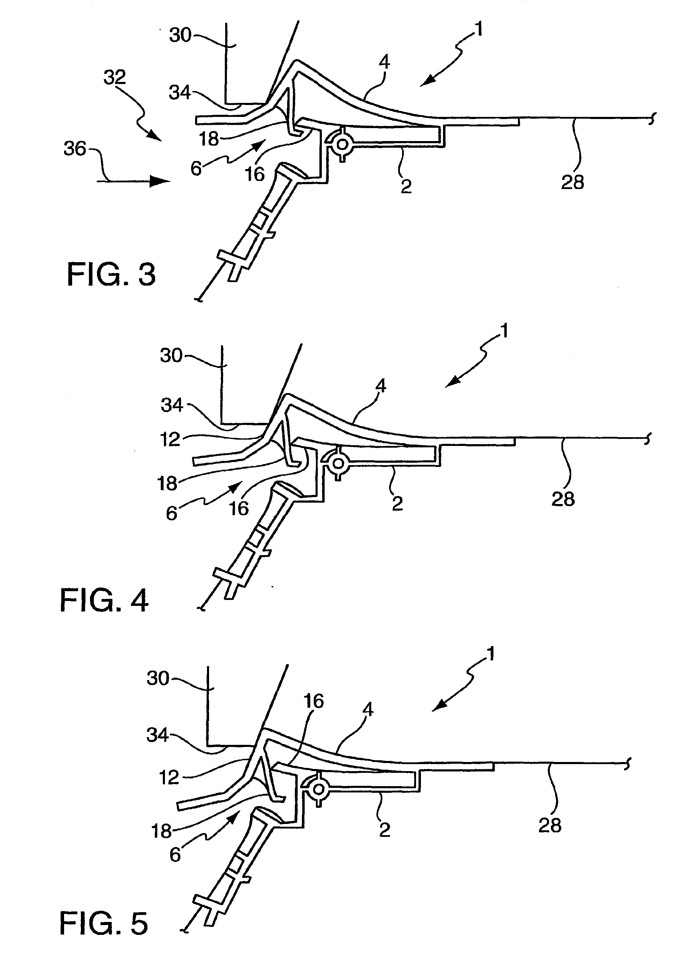

Figures 3,4 and 5 show the retaining clip 1 attached to a sub-assembly 28 and fitted into an aperture 32 in a housing 30 (a part of which is shown). The retaining clip 1 is fitted to the sub-assembly 28 prior to fitting the sub-assembly 28 into the housing 30. Figures 3,4 and 5 show the retaining clip 1 in three engaged positions. Figure 4 shows a normal engaged position, whilst Figures 3 and 5 show the engaged positions that may occur with changes in tolerances, with small gaps (Figure 3) and with large gaps (Figure 5).

Once the retaining clip 1 is attached to the sub-assembly 28, the sub-assembly 28 is fitted into the housing 30 by pressing the sub-assembly 28 in a first direction into the aperture 32 substantially along an assembly axis 36. As the sub-assembly 28 passes into the aperture 32, the flexible member 4 makes contact with an edge 34 of the housing 30 and flexes towards the closed position to allow the sub-assembly 28 to pass into the aperture 32.

When the sub-assembly 28 has passed into the aperture 32 sufficiently for the movable end 10 of the flexible member 4 to pass the edge 34 of the housing the retaining clip 1 opens until the engaging portion 12 contacts the edge 34 of the housing 30. The retaining clip 1 then prevents the sub-assembly 28 from being removed from the housing 30. The support post 16 contacts the guide arm 18 and substantially prevents the engaging portion 12 from moving along the first axis 36 if a removal force is exerted upon the sub-assembly 28 substantially along the assembly axis in a direction to remove the subassembly 28 from the aperture 32. The engaging portion 12 is substantially prevented from moving along the first axis 36 because the support means 6 allow the removal force to be transmitted directly from the engaging portion 12 to the base member 2 without passing via the flexible member 4.

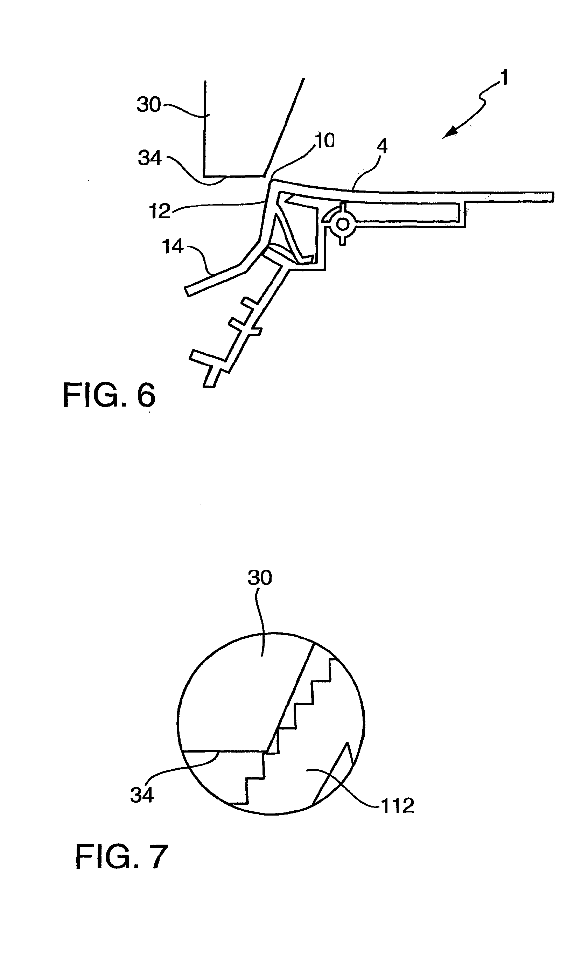

Figure 6 shows the retaining clip 1 in the removal position, or the closed position. A force is applied to the override portion 14 that causes the flexible member 4 to flex towards the closed position. Once the engaging portion 12 no longer contacts the edge 34 of the aperture 32, the sub-assembly 28 can be removed from the housing 30.

Figure 7 shows a close-up of the engaging portion 112 of a retaining clip according to a second embodiment of the engaging portion 112 of a retaining clip according to the invention. In this case, the engaging portion 112 of the clip includes steps or jagged portions that facilitate a strong engagement with the edge 34 of an aperture 32.

The present invention has been described above purely by way of example. It should be noted that modifications in detail may be made within the scope of the invention as defined in the claims.

## Claims

1. An assembly for an automobile, the assembly comprising a housing, and a sub-assembly, the housing having an aperture therethrough said aperture having an edge, the sub-assembly being mounted within the housing by inserting the sub assembly into the aperture in an insertion direction along an assembly axis, and the sub-assembly comprising at least one retaining clip by which the sub-assembly is mounted to the housing, the retaining clip extending along assembly axis and having base member, a flexible member, an engaging portion and a support means, wherein:
a) the base member is attached to the sub-assembly;
b) the flexible member has a fixed and a movable end, the fixed end being attached to the base member and the flexible member extending from the fixed end towards the movable end at an acute angle relative to the assembly axis and towards the edge of the aperture;
c) the movable end of the flexible member carries the engaging portion which extends from the flexible member towards the assembly axis;
d) the flexible member is biased towards an open position away from the assembly axis so that during insertion of the sub-assembly into the aperture, the flexible member contacts the edge of the aperture and is thereby forced towards the assembly axis until the engaging portion engages the edge of the aperture to mount the sub-assembly within the housing and to retain the sub-assembly within the housing against a removal force applied to the sub-assembly opposite the insertion direction;
e) the support means is arranged between the engaging portion and the base member, the support means serving in use to resist deflection of the engaging portion in response to a removal force applied to the sub-assembly and thereby maintain engagement of the engaging portion with the edge of the aperture.

2. An assembly as claimed in claim 1, in which the subassembly is an instrument cluster and the housing is an instrument panel.

3. An assembly as claimed in claim 1 or claim 2 in which the support means comprise a support post extending from the base member and a guide arm extending from the engaging means, the guide arm slidably engaging with the support post.

4. An assembly as claimed in any preceding claim, in which the retaining clip is moulded from plastic.

5. An assembly as claimed in claim 4, in which the retaining clip is moulded in the open position.

6. An assembly as claimed in any preceding claim, in which the retaining clip includes a delivery lock that may be engaged by forcing the flexible member towards the base member from the open position, once engaged, the delivery lock preventing the retaining clip from being opened beyond a predetermined limit.

7. An assembly as claimed in claim 6, in which the delivery lock comprises a hook formed on the guide arm that can be engaged with the support post to prevent the retaining clip from being opened beyond the predetermined limit.

8. An assembly as claimed in any preceding claim, in which the engaging portion has a ridged surface that engages with the edge of the aperture.

9. An assembly as claimed in any preceding claim, in which the retaining clip further comprises an override portion that extends from the engaging portion to permit manual or mechanical movement of the engaging portion.

10. A retaining clip for use in the assembly of claim 1, wherein the retaining clip extends along assembly axis and has a base member, a flexible member, an engaging portion and a support means.
